# EUROPÄISCHE PATENTSCHRIFT

(11) **EP 3 120 449 B1**
(45) Veröffentlichungstag und Bekanntmachung des Hinweises auf die Patenterteilung: **09.05.2018**
(21) Anmeldenummer: 15722024.5
(22) Anmeldetag: 18.03.2015
(51) Int. Cl.: H02N 2/02, H02N 2/04

(54) **TRÄGHEITSANTRIEB**
INERTIAL DRIVE
MÉCANISME D'ENTRAÎNEMENT PAR INERTIE

(30) Priorität: 21.03.2014 DE 102014205280
(43) Veröffentlichungstag der Anmeldung: 25.01.2017
(73) Patentinhaber: Physik Instrumente (PI) GmbH & Co. KG, 76228 Karlsruhe (DE)
(72) Erfinder: HÜBNER, Reinhard, 76337 Waldbronn (DE)
(74) Vertreter: Awapatent A/S
(86) Internationale Anmeldenummer: PCT/DE2015/100113
(87) Internationale Veröffentlichungsnummer: WO 2015/139691

(56) Entgegenhaltungen:
- WO-A2-2008/087469
- WO-A2-2015/036545
- CN-A- 101 071 998
- CN-A- 103 023 374
- DE-A1-102011 109 590
- US-A1- 2007 176 514
- US-A1- 2012 026 613

## Beschreibung

Die Erfindung betrifft einen Trägheitsantrieb nach Anspruch 1.

Trägheitsantriebe sind aus dem Stand der Technik, beispielsweise aus der US 2012/026613 A1 oder WO2008/087469A2, bekannt. Solche Trägheitsantriebe umfassen insbesondere Stick-Slip-Antriebe, also Antriebe, die sich auszeichnen durch einen sich ständig wiederholenden Wechsel zwischen einer Stick- oder Haft-Phase, bei welcher das anzutreibende Element mit der Bewegung des antreibenden Elements mitgenommen wird, und einer Slip- oder Gleit-Phase, bei welcher das anzutreibende Element und das antreibende Element gegeneinander gleiten, und das anzutreibende Element gerade nicht oder nur in vernachlässigbarer Weise mit der Bewegung des antreibenden Elements mitgenommen wird.

Bei piezoelektrischen Stick-Slip-Antrieben wird ein piezoelektrisches Aktorelement mit einer periodischen Spannung, insbesondere einer hochfrequenten Sägezahnspannung, beaufschlagt. Die durch die Spannung bewirkte hochfrequente Ausdehnung und Kontraktion des Aktorelementes wird über ein an diesem angeordnetes Reibelement auf einen Reibkörper dergestalt übertragen, dass der Reibkörper bei einer Auslenkung des Aktorelementes in einer Stick-Phase - wo Haftreibung zwischen dem Reibelement und dem Reibkörper herrscht - bewegt wird, während in einer Slip-Phase Gleitreibung zwischen dem Reibelement und dem Reibkörper stattfindet, so dass der Reibkörper nicht oder nur in sehr geringem Maße mit der Bewegung des Reibelements mitgenommen wird.

Während der Stick-Phase ist die Beschleunigung bzw. die Bewegungsgeschwindigkeit des Aktorelements dabei so bemessen, dass aufgrund der herrschenden Kräfte im Reibkontakt zwischen Reibelement und Reibkörper keine oder nur eine vernachlässigbare Gleitreibung resultiert, so dass auf jeden Fall eine Mitnahme des Reibkörpers mit dem Reibelement resultiert. Im Gegensatz hierzu ist die Beschleunigung bzw. Bewegungsgeschwindigkeit des Aktorelements in der Slip-Phase so hoch, dass die Kräfte im Reibkontakt zwischen Reibelement und Reibkörper nicht mehr ausreichen, damit das Reibelement den Reibkörper mitnimmt, und - bedingt durch die Trägheit des Reibkörpers - eine Relativbewegung zwischen Reibelement und Reibkörper (d.h. ein Gleiten) stattfindet. Durch vielfach wiederholten Ablauf der oben skizzierten Bewegungsprozesse, die pro Stick-Slip-Zyklus nur zu einem sehr kleinen Verfahrweg des Reibkörpers führen, kommt es insgesamt zu einem nur durch die Länge des Reibkörpers begrenzten Verfahrweg.

Oftmals besteht die Randbedingung eines nur sehr kleinen und begrenzten Bauraums zum Einbau des oben skizzierten Trägheitsantriebs in ein entsprechendes übergeordnetes System. Eine beliebige Miniaturisierung des Trägheitsantriebs ist jedoch aus verschiedenen Gründen nicht möglich. So ist es beispielsweise notwendig, dass sich das Aktorelement mit einem seiner Endabschnitte an einer Masse abstützt, die relativ groß ist, so dass die Bewegungsenergie des Aktorelements aufgrund seiner Ausdehnung möglichst vollständig und verlustfrei auf die am gegenüberliegenden Endabschnitt des Aktorelements anliegende Übertragungseinrichtung - in der Regel ein Federelement oder eine Federvorrichtung - übertragen wird, so dass nur die Übertragungseinrichtung in Bewegung versetzt wird, und diese Bewegung letztlich auf das anzutreibende Element bzw. den Reibkörper übertragen wird. Da also die Masse, an der sich das Aktorelement abstützt, einen bestimmten Wert nicht unterschreiten darf, so darf auch der entsprechende Abstützungsabschnitt eine bestimmte Größe bzw. Ausdehnung nicht unterschreiten.

Auf der anderen Seite soll die Masse der Übertragungseinrichtung als beschleunigte Masse möglichst klein sein, was zwar vorteilhaft für eine Miniaturisierung und die Bewegungsübertragung wäre, was jedoch mit aus dem Stand der Technik bekannten Lösungen nur begrenzt umgesetzt werden kann. Die Übertragungseinheit muss hierbei die in der Regel relativ hohe Normalkraft in der Reibpaarung Reibelement - Reibkörper übertragen, die Aktorbewegung möglichst steif weitergeben sowie Unebenheiten und Ausrichtungsschwankungen des anzutreibenden Elementes ausgleichen.

Weiterhin sind die aus dem Stand der Technik bekannten Anordnungen bzw. Vorrichtungen für derartige Trägheitsantriebe meist sehr filigran ausgebildet und werden daher für gewöhnlich durch ein Erodierverfahren gefertigt. Die Übertragungsvorrichtung kann dann nur aus Materialien gefertigt werden, die lediglich mäßige und insgesamt unbefriedigende Federeigenschaften aufweisen. Ein aus DE 10 2011 109 590 A1 bekannter Haft-Gleit-Antrieb umfasst einen verformbaren Rahmen, der kraftschlüssig mit einer Welle koppelbar ist, wobei der Rahmen die Verformung eines piezoelektrischen Aktors mechanisch derart übersetzt, dass sich ein Kupplungsabschnitt über einen Teil des Umfangs der Welle dreht. Der Kupplungsabschnitt ist über ein Festkörpergelenk mit einem Abstützabschnitt des Rahmens verbunden und wird durch eine umgreifende Federklammer gegen die Welle gepresst.

Die oben skizzierten Trägheitsantriebe erfordern zudem oft eine vergleichsweise hohe axiale mechanische Vorspannung bzw. Druckspannung, die auf das Aktorelement wirkt. Bei miniaturisierten Trägheitsantrieben ist das Aufbringen einer derartigen Kraft bzw. Vorspannung wegen der begrenzten Platzverhältnisse kompliziert und technisch schwer umsetzbar.

Es besteht daher die Aufgabe, die erwähnten Nachteile bestehender Trägheitsantriebe zu reduzieren bzw. zu eliminieren. Insbesondere besteht die Aufgabe, einen Trägheitsantrieb bereitzustellen, der sich in weitem Maße miniaturisieren lässt und dabei hinreichend robust funktioniert. Gleichzeitig soll sich der Trägheitsantrieb vergleichsweise einfach und kostengünstig herstellen lassen. Gefordert ist zudem ein Trägheitsantrieb mit einer gut einstellbaren Normalkraft, mit der das Reibelement gegen das anzutreibende Element gedrückt ist bei gleichzeitig möglichst hoher axialer Vorspannung oder Druckspannung auf das Aktorelement. Dies soll auch bei engsten Einbauräumen möglich sein in Verbindung mit einem einfachen Aufbau aus gut miniaturisierbaren Elementen.

Die Lösung der vorgenannten Aufgaben erfolgt durch einen Trägheitsantrieb gemäß Anspruch 1, wobei die sich daran anschließenden Unteransprüche mindestens zweckmäßige Ausgestaltungen und Weiterbildungen umfassen.

Demnach wird von einem Trägheitsantrieb mit einem Rahmenelement und einem in das Rahmenelement eingesetzten längenveränderlichen Aktorelement, vorzugsweise einem piezoelektrischen Aktorelement ausgegangen. Das Rahmenelement weist hierbei einen Abstützungsabschnitt mit einer Abstützungsfläche auf, an der sich das Aktorelement mit einem seiner beiden gegenüberliegenden Endabschnitte bzw. mit der entsprechenden Endfläche abstützt. Weiterhin weist das Rahmenelement einen Umformungsabschnitt mit einer Anlagefläche auf, an der das Aktorelement mit dem anderen Endabschnitt bzw. der entsprechenden Endfläche anliegt. Der Umformungsabschnitt des Rahmenelements weist weiterhin einen Gelenkabschnitt auf, der in erster Linie dazu vorgesehen ist, den Umformungsabschnitt beweglich gegenüber dem Abstützungsabschnitt zu lagern. An dem Umformungsabschnitt des Rahmenelements ist ein flaches, langgestrecktes und vorzugsweise ebenes Federelement mit einem seiner Enden angeordnet bzw. befestigt, wobei das Federelement an seinem gegenüberliegenden freien Ende einen Reibabschnitt aufweist. Weiterhin weist der Trägheitsantrieb einen anzutreibenden Reibkörper auf, der sich in direktem oder indirektem mechanischem bzw. Friktions-Kontakt mit dem Reibabschnitt befindet. Die Längenänderung des Aktorelements ruft hierbei eine rotatorische Bewegung des Umformungsabschnitts um den Gelenkabschnitt hervor, und diese Bewegung wird über das Federelement auf den Reibabschnitt zum Antrieb des anzutreibenden Reibkörpers übertragen, wobei der Reibabschnitt in einer der Anlagefläche abgewandten Richtung beabstandet zu der Anlagefläche angeordnet ist. Beabstandet bedeutet in diesem Zusammenhang und ebenso im Rahmen der weiteren Beschreibung einen positiven, von Null verschiedenen Abstand. Der Ausdruck ,in einer der Anlagefläche abgewandten Richtung' beschreibt im vorliegenden Zusammenhang eine Richtung, die von der Anlagefläche weg in Richtung der Abstützungsfläche weist, so dass der Reibabschnitt entweder in dem Bereich angeordnet ist, in welchem sich auch das Aktorelement befindet, und diesem dann entsprechend gegenüberliegend angeordnet ist, oder aber der Reibabschnitt in der von der Anlagefläche weg in Richtung der Abstützungsfläche weisenden Richtung hinter dem Aktorelement bzw. hinter der Abstützungsfläche angeordnet ist.

Aufgrund der spezifischen Anordnung bzw. Position des Reibabschnitts, der nicht - wie aus dem Stand der Technik bekannt - in einer von der Abstützungsfläche weg weisenden und hin zur Anlagefläche weisenden Richtung beabstandet von dem Aktorelement bzw. beabstandet von der Anlagefläche angeordnet ist, sondern entweder im Bereich des Aktorelements und damit diesem gegenüberliegend oder in der von der Anlagefläche weg weisenden und in Richtung der Abstützungsfläche hin weisenden Richtung hinter dem Aktorelement und beabstandet zu diesem bzw. hinter der Abstützungsfläche angeordnet ist, ist bei gegebenem Bauraum für den Trägheitsantrieb ein wesentlich größerer Designfreiheitsgrad das Rahmenelement betreffend vorhanden. Dadurch kann die geometrische Ausdehnung und damit die Masse des Abstützungsabschnitts trotz der in der Regel geringen Einbaumaße relativ groß gewählt werden, was dem optimierten Betrieb des Trägheitsantriebs zu Gute kommt. Die vom Aktorelement erzeugte Kraft wirkt mit gleichem Betrag auf den Abstützungs- und den Umformungsabschnitt. Wenn sich das Aktorelement in der Länge ändert und dabei Arbeit verrichtet, geht Energie in den Abstützungs- und in den Umformungsabschnitt über. Dabei entspricht die übergehende Energiemenge dem reziproken Massenverhältnis der beteiligten Elemente. Je leichter Umformungsabschnitt und Federelement im Verhältnis zum Abstützungsabschnitt sind, desto mehr Energie wird letztlich an den Reibabschnitt des Federelements weitergegeben und desto weniger Energie fließt unerwünscht in den Abstützabschnitt.

Durch die Verwendung eines flachen, in der Regel ebenen und langgestreckten Federelements gelingt eine gegenüber dem Stand der Technik deutlich vereinfachte Herstellung des erfindungsgemäßen Trägheitsantriebs. Zudem erlaubt das Federelement und seine spezifische Anordnung innerhalb des Trägheitsantriebs eine gezielte Einstellung der auf das in dem Rahmenelement eingesetzten Aktorelement einwirkenden Vorspannung bzw. Druckkraft. Dies gilt gleichermaßen für die auf den Reibabschnitt einwirkende Normalkraft in Richtung des anzutreibenden Elements. Die gezielte Einstellung besagter Kräfte ist essentiell für den verlässlichen Betrieb des Trägheitsantriebs.

Es kann von Vorteil sein, dass die Masse des Abstützungsabschnitts mindestens das fünffache der Masse des Umformungsabschnitts beträgt. Bei einem solchen Massen-Verhältnis wird die Längenänderung des Aktorelements bzw. die entsprechende Kraft effektiv und nahezu verlustfrei in eine Bewegung des Umformungsabschnitt umgesetzt, wobei eine nur vernachlässigbare (entgegengesetzte) Bewegung des Abstützungsabschnitts resultiert. Je höher dabei die Masse des Abstützungsabschnitts gegenüber dem Umformungsabschnitt ist, desto besser bzw. effektiver erfolgt die zuvor beschriebene Umformung bzw. Bewegungsumsetzung.

Es kann ebenso von Vorteil sein, dass der Gelenkabschnitt einstückig mit dem Rahmenelement ausgebildet ist und ein Festkörpergelenk bildet. Dadurch lässt sich der Gelenkabschnitt sehr klein und mit wenig Materialeinsatz realisieren. Neben den gewünschten kleinen Abmaßen wird dadurch die zu bewegende Masse im Umformungsabschnitt niedrig gehalten. Für piezoelektrische Aktoren mit typischerweise geringen Hüben und hohen Kräften sind Festkörpergelenke besonders vorteilhaft, da sie reibungsfrei arbeiten und sehr hohe Kräfte mit minimaler Hysterese übertragen.

Es kann auch von Vorteil sein, dass das Rahmenelement und das Federelement derart zueinander angeordnet sind, dass das Federelement eine permanente, gegen die Oberfläche des Reibkörpers gerichtete Vorspannung aufweist, und diese Vorspannung über das Rahmenelement auf das Aktorelement übertragen wird und eine über die Verformung des Federelementes justierbare permanente Druckbeanspruchung des Aktorelementes bewirkt. Somit kann auf relativ einfache Weise zum Einen die gegen die Oberfläche des Reibkörpers gerichtete Vorspannung, und zum Anderen die auf das Aktorelement wirkende Druckbeanspruchung eingestellt werden. Die Einstellung der gegen die Oberfläche des Reibkörpers gerichtete Vorspannung bzw. die entsprechende Normalkraft ist hierbei wichtig für den Reibkontakt zwischen dem Reibabschnitt des Federelements und dem Reibkörper. Die auf das Aktorelement einwirkende Druckkraft muss so bemessen sein, dass eine eventuell auf das Aktorelement wirkende Zugkraft stets kleiner ist als die aufgebrachte Druckkraft.

Es kann zudem von Vorteil sein, dass das Rahmenelement einen Gegenlagerabschnitt und einen Auflageabschnitt aufweist, wobei das Federelement auf dem Auflageabschnitt aufliegt, und der Abschnitt des Federelements zwischen dem Gegenlagerabschnitt und dem Auflageabschnitt einen Spannabschnitt mit einer von Null verschiedenen Spannlänge Ls bildet.

Ferner kann es von Vorteil sein, dass das Federelement zwischen dem Auflageabschnitt und dem Reibabschnitt einen Federabschnitt mit einer von Null verschiedenen Federlänge L_{F} bildet, und die Federlänge mindestens doppelt so groß ist wie die Spannlänge.

Weiterhin kann es von Vorteil sein, dass die auf das Aktorelement einwirkende Druckkraft mindestens so groß ist wie die auf den Reibkörper und/oder den Reibabschnitt einwirkende Normalkraft. Die optimale Aktorvorspannung ist dabei abhängig vom Aktortyp, typischerweise aber deutlich höher als die materialabhängige optimale Normalkraft in der Reibpaarung Reibabschnitt - Reibkörper. Die Aktorvorspannung wird zum Schutz des Aktorelements vor Zugspannungen entsprechend dimensioniert. Bei dem erfindungsgemäßen Trägheitsantrieb steigt insbesondere mit der Belastung des Trägheitsantriebs, d.h. mit der Längenänderungsgeschwindigkeit des Aktorelements, auch dessen Schutz vor Zugspannungen. Eine versehentliche Zerstörung des Aktorelements während des Montageprozesses wird unwahrscheinlicher.

Außerdem kann es von Vorteil sein, dass das Federelement als separates Element vorliegt, und der Gegenlagerabschnitt derart ausgebildet ist, dass das Federelement dort in abstützender Weise anlegbar ist. Dies erleichtert die Herstellung des Trägheitsantriebs und erlaubt konstruktive Abwandlungen auf einfache und kostengünstige Weise. Unter Umständen ist es hierbei ausreichend, dass das Federelement lediglich am Gegenlagerabschnitt ohne einen realisierten Eingriff oder Hintergriff oder sonstige Befestigung anliegt, so dass die entsprechenden Flächen aneinandergepresst sind.

Die Spannlänge Ls hat dabei wesentlichen Einfluss auf die in Auflageabschnitt und Gegenlagerabschnitt entstehenden Normalkräfte. Ausreichend hohe Normalkräfte im Auflage- und im Gegenlagerabschnitt sichern das separate Federelement vor Verrutschen und ermöglichen die zuverlässige Übertragung der Bewegung des Aktorelements an den Reibabschnitt.

Daneben hat das Verhältnis von Federlänge zu Spannlänge einen großen Einfluss auf die am Gegenlagerabschnitt und am Auflageabschnitt resultierenden Reibkräfte, die bei typischen Reibwerten der Reibpaarung Federelement - Rahmenelement ein Verrutschen des separaten Federelements an den entsprechenden Anlagestellen sicher verhindern.

Darüber hinaus kann es von Vorteil sein, dass das Federelement eine über dessen Länge veränderliche Breite aufweist, wobei die Breite innerhalb des Spannabschnitts ausgehend vom Aufnahmeabschnitt zum Auflageabschnitt hin zunimmt, und sich die Breite ausgehend vom Auflageabschnitt in Richtung des Reibabschnitts zumindest abschnittsweise verjüngt. Die zunehmende Breite innerhalb des Spannabschnitts bewirkt in diesem Bereich eine hinreichend feste Einspannung des Federelements im Rahmenelement. Ein Ziel der Variation der Breite des Federelements ist die Realisierung eines möglichst großen Bereichs homogener Spannungsverteilung innerhalb des Federelements. Je größer der Bereich homogener Spannungsverteilung realisiert werden kann, desto flexibler wird das Federelement, d.h. umso größer kann die Durchbiegung des Federelements gewählt werden. Bei typischer Auslegung des erfindungsgemäßen Trägheitsantriebs ist bei gegebener Normalkraft auf den Reibabschnitt des Federelements beträgt dessen Verformung in etwa das 100- fache das Aktorhubes. Als Folge bewirkt die Auslenkung des Aktorelements im Betrieb nur eine Schwankung der Normalkraft um ±1 %.

Daneben kann es von Vorteil sein, dass die Breite des Federelements ein Minimum zwischen dem Auflageabschnitt und dem Reibabschnitt aufweist. Zum Aufnahmeabschnitt hin wird das Federelement zur Erzielung eines möglichst großen Bereichs homogener Spannungsverteilung - wie zuvor bereits beschrieben - breiter. Aber auch zum Reibabschnitt hin sollte das Federelement an Stabilität zunehmen, um den Bewegungen des Aktorelements möglichst direkt zu folgen. Beide Anforderungen wechseln am Minimum ihre Priorität.

Zusätzlich kann es von Vorteil sein, dass die Breite des Federelements im Bereich des Auflageabschnitts konstant ist. Dadurch wachsen im Federelement um den Auflageabschnitt herum die mechanischen Spannungen bei gegebener Normalkraftbelastung an. Unter Einwirkung der Normalkraft wird sich das Federelement lokal im Auflagebereich stärker krümmen. Der entstehende elastische Knick verhindert zusätzlich das Verrutschen des Federelementes auf dem Auflageabschnitt.

Überdies kann es von Vorteil sein, dass der Reibabschnitt des Federelements ein Reibelement aufweist, das in das Federelement eingesetzt ist.

Desweiteren kann es von Vorteil sein, dass das Verhältnis zwischen der Länge L_{AAFK} des Hebels zwischen dem Auflageabschnitt und dem Gelenkabschnitt und der Länge L_{ASFK} des Hebels zwischen dem Schwerpunkt des Aktorelements und dem Gelenkabschnitt zwischen 1,2 und 3 liegt. Bei solch einem Hebelverhältnis kann der Trägheitsantrieb besser an einen vorhandenen Aktor angepasst werden. Weiterhin kann bei gleicher Schwingungsfrequenz des Aktorelements unter Verringerung der Schubkraft die Geschwindigkeit des Trägheitsantriebs bzw. des anzutreibenden Elements erhöht werden.

Hinzukommend kann es von Vorteil sein, dass das Rahmenelement einstückig mit einer übergeordneten, das Rahmenelement tragenden Struktur ausgebildet ist. Dies kann im Rahmen einer integralen und/oder miniaturisierten Ausführung des Trägheitsantriebs von Vorteil sein.

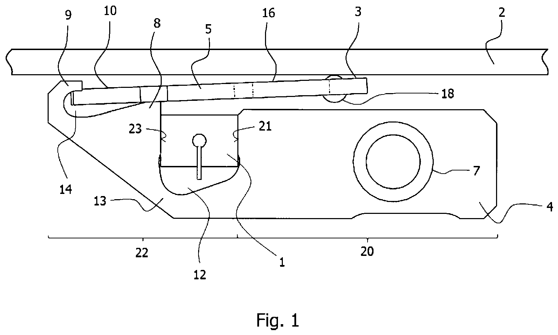

Der erfindungsgemäße Trägheitsantrieb soll nachfolgend anhand von Ausführungsbeispielen näher erläutert werden. Zur Verdeutlichung dienen die beigefügten Figuren 1 bis 5. Es werden für gleiche bzw. gleichwirkende Teile dieselben Bezugszeichen verwendet.

Es zeigen in schematischer und nicht maßstäblicher Weise:
Fig. 1: Ausführungsform eines erfindungsgemäßen Trägheitsantriebs in Seitendarstellung
Fig. 2: Trägheitsantrieb gemäß Fig. 1 mit Darstellung der grundlegenden Bewegungsrichtungen einzelner Abschnitte bzw. Teile
Fig. 3: Trägheitsantrieb gemäß Fig. 1 mit Darstellung der vorherrschenden Kräfte und relevanter Hebellängen
Fig. 4: Trägheitsantrieb gemäß Fig. 1 in einer Draufsicht von oben
Fig. 5: Trägheitsantrieb gemäß Fig. 1 in perspektivischer Ansicht

Fig. 1 zeigt eine Darstellung des erfindungsgemäßen Trägheitsantriebs in einer Seitenansicht. Der Trägheitsantrieb enthält ein längenveränderliches, piezoelektrisches Aktorelement 1, das in ein Rahmenelement 4 eingesetzt ist, wozu das Rahmenelement 4 eine entsprechende Aussparung 12 besitzt. Das Rahmenelement 4 besteht aus einem massiven Körper, der als ein Frästeil ausgebildet ist. Er besteht aus einem leicht fräsbaren Material, insbesondere aus so genanntem Automatenstahl.

Das Rahmenelement weist einen Abstützungsabschnitt 20 mit einer Bohrung 7 auf, wobei die Bohrung zum Einbringen einer Montageschraube oder eines vergleichbaren Befestigungsmittels vorgesehen ist, so dass das Rahmenelement an einem hier nicht dargestellten ortsfesten Montagerahmen befestigbar ist. Es ist jedoch ebenso denkbar, dass das Rahmenelement einstückig mit dem Montagerahmen verbunden und aus diesem herausgearbeitet ist. Neben dem Abstützungsabschnitt 20 weist das Rahmenelement einen Umformungsabschnitt 22 auf, wobei der Abstützungsabschnitt 20 eine Abstützungsfläche 21 aufweist, an der sich das Aktorelement mit einer seiner beiden Endflächen abstützt. Der Umformungsabschnitt 22 weist eine Anlagefläche 23 auf, die der Abstützungsfläche 21 gegenüberliegt, und an der die andere Endfläche des Aktorelements anliegt. Das Aktorelement ist hierbei nicht stoffschlüssig mit dem Rahmenelement verbunden, d.h. das Aktorelement ist lediglich zwischen der Abstützungsfläche und der Anlagefläche eingeklemmt bzw. eingespannt. Es ist jedoch ebenso möglich, das Aktorelement stoffschlüssig, beispielsweise durch Kleben, mit der Abstützungsfläche und/oder der Anlagefläche zu verbinden.

Der Umformungsabschnitt weist einen Gelenkabschnitt 13 auf, welcher dafür sorgt, dass der Umformungsabschnitt beweglich gegenüber dem Abstützungsabschnitt gehalten bzw. gelagert ist. Insbesondere erlaubt der Gelenkabschnitt eine Dreh- bzw. Kippbewegung des Umformungsabschnitts gegenüber dem Abstützungsabschnitt. In der Ausführungsform gemäß Fig. 1 ist der Gelenkabschnitt einstückig mit dem Rahmenelement ausgebildet, und zwar als Verjüngung desselben. Daneben ist jedoch ebenso denkbar, dass der Gelenkabschnitt durch ein separates Gelenkelement gebildet ist.

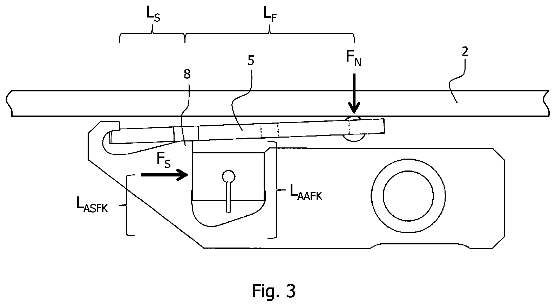

Der Umformungsabschnitt 22 weist zudem einen Gegenlagerabschnitt 9 auf, welcher in der Ausführungsform gemäß Fig. 1 hakenförmig ausgebildet ist. Der Umformungsabschnitt besitzt dementsprechend eine Aussparung 14, die zur Aufnahme bzw. zum Einspannen eines Endabschnitts eines langgestreckten, flachen Federelements 5 dient. Dieses separate Federelement besteht zweckmäßigerweise aus einem hochleistungsfähigen Federwerkstoff, beispielsweise aus gewalztem Stahl, Titan bzw. einer Titanlegierung oder einem vergleichbaren Material. Das Federelement 5 stützt sich einerseits am Gegenlagerabschnitt 9 ab; andererseits liegt das Federelement 5 auf einem Auflageabschnitt 8 auf, der beabstandet zum Gegenlagerabschnitt angeordnet ist. Das Federelement 5 bildet hierdurch zwischen dem Gegenlagerabschnitt 9 und dem Auflageabschnitt 8 einen Spannabschnitt mit einer Spannlänge Ls (siehe Fig. 3) aus.

An den Spannabschnitt des Federelements 5 grenzt ein Federabschnitt 16 mit einer Federlänge L_{F} (siehe ebenfalls Fig. 3) an, der sich vom Auflageabschnitt 8 bis zum anderen und freien Ende des Federelements 5 erstreckt, wobei das freie Ende des Federelements 5 einen Reibabschnitt 3 bildet. Der Reibabschnitt ist zum direkten oder indirekten Kontakt mit dem anzutreibenden Reibkörper 2 vorgesehen. In der Ausführungsform gemäß Fig. 1 weist der Reibabschnitt 3 ein Reibelement 18 aus einem keramischen Material auf, das in das Federelement eingesetzt ist, und den Reibkörper, der ebenfalls aus einem keramischen Material besteht, kontaktiert. Somit liegt hier eine indirekte Kontaktierung des Reibkörpers durch den Reibabschnitt vor. Es ist jedoch ebenso möglich, dass der Reibabschnitt kein Reibelement aufweist und in direktem Kontakt mit dem Reibkörper ist.

Auf das Reibelement wirkt eine Normalkraft aufgrund einer durch die Anordnung von Rahmenelement zu Reibkörper bedingten Durchbiegung des Federelements zwischen dem Auflageabschnitt und dem Reibabschnitt (d.h. im Federbereich). Die durch diese Durchbiegung hervorgerufene Federkraft wird vom Federelement über den Auflageabschnitt und den Gegenlagerabschnitt auf den Umformungsabschnitt derart übertragen wird, dass eine Kipp- oder Drehbewegung des Umformungsabschnitts in Richtung des Abstützungsabschnitts bzw. auf den Abstützungsabschnitt zu induziert wird. Eine tatsächliche Kipp- oder Drehbewegung wird dabei jedoch durch das zwischen Umformungsabschnitt und Abstützungsabschnitt in der Aussparung 12 befindliche Aktorelement verhindert. Allerdings resultiert eine entsprechende Druckkraft auf das Aktorelement, so dass dieses zwischen der Abstützfläche 21 und der Anlagefläche 23 eingespannt ist.

Die auf das Aktorelement einwirkende Druckkraft lässt sich hierbei in einem weiten Bereich einstellen. Sie wird beeinflusst durch das Material des Federelements 5, durch die Spannlänge bzw. die Federlänge des Federelements und auch die Geometrie des Rahmenelements, insbesondere des Umformungsabschnitts. Gleichzeitig lässt sich durch die vorgenannten Merkmale auch die Normalkraft, die das Reibelement auf den Reibkörper ausübt, beeinflussen und gezielt einstellen.

Durch die Durchbiegung des Federelements im Federbereich wird das Federelement in seinem Spannbereich gegen den Gegenlagerabschnitt gedrückt und somit eingespannt. Gleichzeitig kommt dem Spannbereich aber auch eine Federwirkung zu, die dazu führt, dass die nutzbare Verformung des Federelements erhöht wird. Zudem führt diese Federwirkung zu einer effektiveren Entkopplung zwischen Reibabschnitt und Aktorelement.

Die durch eine elektrische Spannungsbeaufschlagung des Aktorelementes hervorgerufene Längenänderung bewirkt in erster Linie eine Bewegung des Umformungsabschnitts relativ zum Abstützungsabschnitt, der höchstens eine vernachlässigbare Bewegung in entgegengesetzter Richtung vollführt. Somit wird die Bewegungsenergie des Aktorelements nahezu vollständig auf den Umformungsabschnitt übertragen, der eine rotatorische Bewegung um den Gelenkabschnitt 13 in einer dem Abstützungsabschnitt abgewandten Richtung vollführt. Durch die feste Einspannung des Federelements zwischen Gegenlagerabschnitt und Auflageabschnitt wird die Bewegung des Umformungsabschnitts auf das Federelement bzw. auf dessen Reibabschnitt übertragen, wobei der Reibabschnitt bzw. das in diesen eingesetzte Reibelement eine Bewegung ausführt, deren Richtung parallel zur Längsausrichtung des Reibkörpers verläuft. Aufgrund des mechanischen bzw. Friktions-Kontakts zwischen dem Reibelement und dem Reibkörper und der durch das Reibelement auf den Reibkörper ausgeübten Normalkraft erfolgt - je nach Höhe der durch das Aktorelement auf das Reibelement übertragenen Beschleunigung - entweder eine Mitnahme des Reibkörpers mit dem Reibelement (bei genügend geringer Beschleunigung), oder es findet eine Relativbewegung (ein Gleiten) zwischen Reibelement und Reibkörper statt (bei genügend hoher Beschleunigung, so dass die Trägheit des Reibkörpers relevant ist).

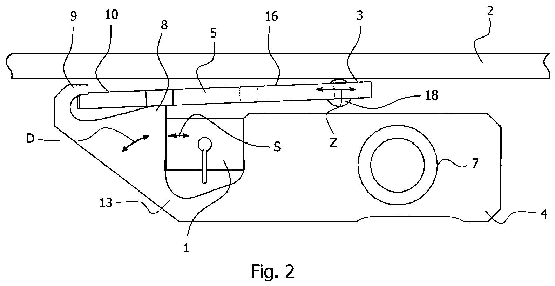

Fig. 2 dient der Erläuterung der Kinematik des Trägheitsantriebs gemäß Fig. 1. Das Aktorelement 1 führt unter dem Einfluss einer äußeren elektrischen Wechselspannung, vorzugsweise einer Sägezahnspannung, axiale Schwingungen S, d.h. Schwingungen entlang seiner Längsachse S, aus. Es steht dabei in einem permanenten mechanischen Kontakt mit dem Rahmenelement 4. Die axialen Schwingungen führen dazu, dass sich der Umformungsabschnitt gleichsinnig bewegt. Dies wird dadurch erreicht, dass der Umformungsabschnitt 22 einen durch Verjüngung des Rahmenelements 4 gebildeten Gelenkabschnitt 13 aufweist, der ein Festkörpergelenk bildet. Dieses Festkörpergelenk erlaubt die Bewegung des Umformungsabschnitts relativ zum Abstützungsabschnitt, wobei der Umformungsabschnitt eine rotatorische bzw. eine einen bestimmten Winkelbereich überstreichende Dreh- oder Kippbewegung D ausführt. Diese Dreh- oder Kippbewegung des Umformungsabschnitts führt in entsprechender Weise zur Bewegung des Gegenlagerabschnitts 9 und damit auch zur Bewegung des zwischen Gegenlagerabschnitt 9 und Auflageabschnitt 8 eingespannten Federelements 5, so dass schließlich das Reibelement 3 eine Bewegung Z ausführt, deren Richtung zur Längsausdehnungsrichtung des Reibkörpers parallel ist.

Der Trägheits- oder Stick-Slip-Antrieb funktioniert dabei so, dass bei einer langsamen Ausdehnung des Aktorelementes 1 und einer entsprechend langsamen Drehbewegung D des Umformungsabschnitts 22 um den Gelenkabschnitt 13 durch die Wirkung des Gegenlagerabschnitts 9 und des Auflageabschnitts 8 zum Einen eine etwas stärkere Durchbiegung des Federelementes 5 erfolgt, die dafür sorgt, dass das Reibelement 3 mit etwas erhöhter Normalkraft gegen den Reibkörper gedrückt wird, und zum Anderen eine lineare Bewegung des Reibelements entlang des Reibkörpers resultiert, wobei diese Bewegung so langsam ist, dass aufgrund der bestehenden Reibkraft im Kontakt zwischen Reibelement und Reibkörper eine Haftreibung vorherrscht, welche dafür sorgt, dass der Reibkörper der Bewegung des Reibelements folgt. Letztendlich erfolgt durch die spezielle Anordnung des Trägheitsantriebs die Umformung der Drehbewegung des Umformungsabschnitts 22 in eine lineare Bewegung des Reibelements 3, wobei die lineare Bewegung des Aktorelements 1 übersetzt durch den Hebel mit der Länge L_{ASFK} (siehe hierzu Fig. 3) auf das Reibelement 3 übertragen wird. Die Länge L_{ASFK} definiert hierbei den Abstand zwischen dem Schwerpunkt des Aktorelements und dem Gelenkabschnitt.

Bei der nachfolgenden und im Vergleich zur Ausdehnung schnelleren Verkürzung des Aktorelementes 1 wird die in dem Federelement 5 und dem Umformungsabschnitt 22 gespeicherte Verformungsenergie wieder freigegeben. Die entsprechenden Verformungen bilden sich elastisch zurück. Infolgedessen bleiben die Abstützungsfläche 21 und die Anlagefläche 23 des Rahmenelements 4 auch während diese Verkürzungs- oder Kontraktionsphase des Aktorelements mit diesem in Kontakt. Es muss somit von dem Aktorkörper lediglich eine sehr geringe Zugkraft aufgewendet werden, wobei der absolute Wert der Zugkraft stets unter dem absoluten Wert der stets auf das Aktorelement einwirkenden Druckkraft ist, so dass auch bei auf das Aktorelement einwirkender Zugkraft das Aktorelement insgesamt noch unter einer Druckspannung steht. Mit der Verkürzung des Aktorelements 1 bewegt sich auch der Umformungsabschnitt in die entsprechende Richtung und nimmt hierbei das Federelement mit. Dadurch bewegt sich auch das Reibelement in die gleiche Richtung, die entgegengesetzt ist zu der Richtung während der Ausdehnung des Aktorelements. Dabei ist die auf das Reibelement einwirkende Normalkraft im Wesentlichen gleichbleibend. Aufgrund der Trägheit des Reibkörpers kommt es bei dieser Rückbewegung des Federelements bzw. des Reibelements zu einer Relativbewegung, d.h. zu einem Gleiten, zwischen Reibelement und Reibkörper, wobei die dann wirkende Gleitreibung höchstens zu einer minimalen und funktionsunkritischen Verschiebung des Reibkörpers entgegen der Antriebsrichtung führt.

Für die Funktion des Trägheitsantriebs ist sowohl der Betrag der zwischen dem Reibelement und dem Reibkörper wirkenden Haftreibung (in der Haft- oder Stick-Phase), als auch der Betrag der zwischen ihnen wirkenden Gleitreibung (in der Gleit- oder Slip-Phase) von Bedeutung. Außerdem muss zwischen dem Aktorelement 1 und dem Rahmenelement 4 eine hinreichend große Druckkraft wirken, sodass das Aktorelement während seiner Kontraktionsbewegung keine oder nur eine vernachlässigbare effektive Zugbeanspruchung erfährt. Der erfindungsgemäße Trägheitsantrieb erlaubt hierbei eine einfache Einstellung der auf das Aktorelement wirkenden Druckkraft.

Die in dem erfindungsgemäßen Trägheitsantrieb wirkenden Kräfte bzw. die bei diesem wirkenden relevanten Hebel sind in Fig. 3 dargestellt. Die zwischen dem Reibelement 3 und dem Reibkörper 2 wirkende Normalkraft ist hierbei mit F_{N} bezeichnet. Diese Kraft greift über die Federhebellänge L_{F} an. Die Federhebellänge L_{F} ist die Länge des Federelements 5 zwischen dem Auflageabschnitt 8 und dem Reibelement 3. Zudem ist in Fig. 3 die Spannlänge Ls des Spannabschnitts 10 dargestellt. Die auf das Aktorelement 1 wirkende Druckkraft ist als Fs bezeichnet. Diese greift über eine Länge L_{ASFK} an, wobei L_{ASFK} der Abstand zwischen dem effektiven Drehpunkt des Gelenkabschnitts 13 und dem Schwerpunkt des Aktorelementes 1 ist. Diese gesamte Anordnung des erfindungsgemäßen Trägheitsantriebs wirkt so, dass eine bestimmte Verformung des Federelementes und damit eine bestimmte, auf das Federelement wirkende Normalkraft in eine bestimmte, auf das Aktorelement wirkende Druckkraft übersetzt wird.

Die Verformung bzw. Auslenkung des Federelements 5 im Bereich des Reibelements 3 ist dabei typischerweise 50 bis 200 mal so groß wie die Auslenkung des Aktorelements. Das führt dazu, dass auch bei Unebenheiten des Reibkörpers oder durch Positionsänderungen des Reibkörpers senkrecht zur Antriebsrichtung aufgrund seiner Lagerung nur unwesentliche und damit vernachlässigbare Änderungen der Normalkraft und der Aktorvorspannung resultieren.

Das bedeutet, dass die auf das Aktorelement einwirkende Druckkraft vollständig über die auf den Reibkörper 2 einwirkende Normalkraft einstellbar ist. Daraus ergibt sich eine besonders leichte Kalibrierbarkeit und Justierfähigkeit des erfindungsgemäßen Trägheitsantriebs. Bei der Montage des erfindungsgemäßen Trägheitsantriebs ist lediglich dafür zu sorgen, dass das Aktorelement mit einem geeigneten Passungsmaß in das Rahmenelement 5 einfügbar ist. Weiterhin sichert diese Gestaltung eine besonders einfache Zerlegbarkeit des gesamten Trägheitsantriebs. Sobald das Federelement vollständig entspannt ist, wird das Aktorelement durch das Rahmenelement frei gegeben und beide Teile können sehr leicht voneinander getrennt werden, ohne dass Presspassungen oder Druckkräfte überwunden werden müssen. Diese Vorrichtung sichert auch hinreichend viele Freiheitsgrade sowohl bei der Gestaltung des Federelementes als auch bei der Gestaltung des Rahmenelementes. Dabei kann vor allem über die Gestaltung des Federelementes die Vorrichtung in einfacher Weise justiert werden.

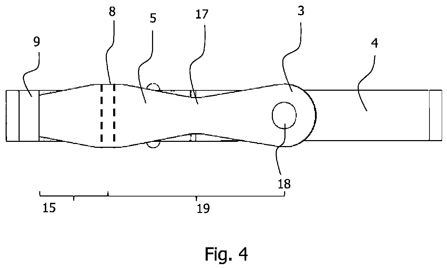

Fig. 4 zeigt den erfindungsgemäßen Trägheitsantrieb gemäß Fig. 1 in einer Draufsicht, d.h. mit Blick auf das Federelement. Das Federelement 5 weist dabei in seiner Längsrichtung eine variierende Breite auf. Vom Bereich des Gegenlagerabschnitts 9 bis zum Auflageabschnitt 8, der einen Spannbereich 15 definiert, nimmt die Breite kontinuierlich zu. Das Federelement weist somit in diesem Bereich eine V-Form auf. Im Bereich des Auflageabschnitts bleibt die Breite dann konstant. Bis zu einem Mittelabschnitt 17 eines sich an den Auflageabschnitt 8 anschließenden Federbereichs 19 nimmt die Breite des Federelements kontinuierlich ab, um danach zum Reibabschnitt 3 wieder zuzunehmen, wobei die Breite des Federelements im Bereich des Reibabschnitts in etwa so groß ist wie im Bereich des Auflageabschnitts 8.

Die größere Breite des Federelementes im Bereich des Auflageabschnitts erklärt sich durch die Notwendigkeit einer möglichst sicheren Lagerung des Federelementes. Zwischen dem Auflageabschnitt und dem Reibabschnitt 18 kann das Federelement jedoch praktisch beliebig ausgebildet sein. Durch eine entsprechende Wahl des Breitenverlaufs kann die Steifigkeit des Federelementes zweckmäßig gestaltet und angepasst werden.

Nahe um den Auflagebereich 8 empfiehlt es sich, die Breite des Federelementes 5 konstant zu halten. Bedingt durch das am Reibelement 3 induzierte Biegemoment steigen so die mechanischen Spannungen im Federelement 5 zum Auflagebereich hin an. Das Federelement krümmt sich im Bereich der höchsten Spannungen am stärksten. Es entsteht ein leichter Knick ohne plastische Verformungen, der die Fixierung des Federelementes verbessert.

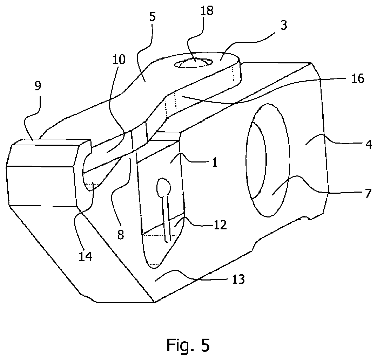

Fig. 5 zeigt eine perspektivische Darstellung des erfindungsgemäßen Trägheitsantriebs. Grundsätzlich ist das Rahmenelement 4 als ein prismatischer Körper ausgebildet. Dessen Breite kann grundsätzlich beliebig klein ausgebildet sein, wobei diese allerdings mit der Gesamtgröße des Trägheitsantriebs skaliert. Dieser ist wegen seines vergleichsweise einfachen Aufbaus einer Miniaturisierung sehr gut zugänglich. Möglich ist auch eine gestaffelte Anordnung mehrerer der gezeigten Trägheitsantriebe, die insbesondere über deren Bohrungen 7 auf eine gemeinsame Halterung aufgeschoben werden können. Die einzelnen Anordnungen können auch unterschiedlich orientiert sein, wobei eventuelle Richtungsabhängigkeiten kompensiert werden.

Die erfindungsgemäße Vorrichtung wurde anhand beispielhafter Ausführungsformen erläutert. Im Rahmen fachmännischen Handelns sind weitere Ausgestaltungen möglich. Weitere Ausführungsformen ergeben sich insbesondere auch aus den Unteransprüchen.

## Patentansprüche

1. Trägheitsantrieb, umfassend ein längenveränderliches, insbesondere piezoelektrisches Aktorelement (1), ein Rahmenelement (4) mit einem Abstützungsabschnitt (20), an dessen Abstützungsfläche (21) sich ein erster Endabschnitt des Aktorelements (1) abstützt, und mit einem Umformungsabschnitt (22), an dessen Anlagefläche (23) ein zweiter Endabschnitt des Aktorelements (1), der dem ersten Endabschnitt des Aktorelements (1) gegenüberliegt, anliegt, wobei der Umformungsabschnitt (22) einen Gelenkabschnitt (13) aufweist, und ein an dem Umformungsabschnitt (22) des Rahmenelements (4) angeordnetes flaches, vorzugsweise ebenes Federelement (5) mit einem Reibabschnitt (3) an seinem freien Ende, und ein anzutreibender Reibkörper (2), der sich in direktem oder indirektem mechanischem Kontakt mit dem Reibabschnitt (3) befindet, wobei eine Längenänderung des Aktorelements (1) eine rotatorische Bewegung des Umformungsabschnitts (22) um den Gelenkabschnitt (13) hervorruft, die über das Federelement (5) auf den Reibabschnitt (3) zum Antrieb des anzutreibenden Reibkörpers (2) übertragen wird, wobei der Reibabschnitt (3) in einer der Anlagefläche (23) abgewandten Richtung beabstandet zu der Anlagefläche (23) angeordnet ist.

2. Trägheitsantrieb nach Anspruch 1, **dadurch gekennzeichnet, dass** die Masse des Abstützungsabschnitts (20) mindestens das fünffache der Masse des Umformungsabschnitts (22) beträgt.

3. Trägheitsantrieb nach Anspruch 1 oder 2, **dadurch gekennzeichnet, dass** der Gelenkabschnitt (13) einstückig mit dem Rahmenelement (4) ausgebildet ist und ein Festkörpergelenk bildet.

4. Trägheitsantrieb nach einem der vorhergehenden Ansprüche, **dadurch gekennzeichnet, dass** das Rahmenelement (4) und das Federelement (5) derart zueinander angeordnet sind, dass das Federelement (5) eine permanente, gegen die Oberfläche des Reibkörpers (2) gerichtete Vorspannung aufweist, und diese Vorspannung über das Rahmenelement (4) auf das Aktorelement (1) übertragen wird und eine über die Verformung des Federelementes (4) justierbare permanente Druckbeanspruchung des Aktorelementes (1) bewirkt.

5. Trägheitsantrieb nach Anspruch 4, **dadurch gekennzeichnet, dass** das Rahmenelement (4) einen Gegenlagerabschnitt (9) und einen Auflageabschnitt (8) aufweist, wobei das Federelement (5) auf dem Auflageabschnitt (8) aufliegt, und der Abschnitt des Federelements (5) zwischen dem Gegenlagerabschnitt (9) und dem Auflageabschnitt (8) einen Spannabschnitt (10) mit einer von Null verschiedenen Spannlänge Ls bildet.

6. Trägheitsantrieb nach Anspruch 5, **dadurch gekennzeichnet, dass** das Federelement (5) zwischen dem Auflageabschnitt (8) und dem Reibabschnitt (3) einen Federabschnitt (16) mit einer von Null verschiedenen Federlänge L_{F} bildet, und die Federlänge mindestens doppelt so groß ist wie die Spannlänge.

7. Trägheitsantrieb nach einem der Ansprüche 4 bis 6, **dadurch gekennzeichnet, dass** die auf das Aktorelement (1) einwirkende Druckkraft mindestens so groß ist wie die auf den Reibkörper (2) und/oder den Reibabschnitt (3) einwirkende Normalkraft.

8. Trägheitsantrieb nach einem der Ansprüche 5 bis 7, **dadurch gekennzeichnet, dass** das Federelement (5) als separates Element vorliegt, und der Gegenlagerabschnitt (9) derart ausgebildet ist, dass das Federelement (5) dort in abstützender Weise anlegbar ist.

9. Trägheitsantrieb nach Anspruch 8, **dadurch gekennzeichnet, dass** das Federelement (5) eine über dessen Länge veränderliche Breite aufweist, wobei die Breite innerhalb des Spannabschnitts (10) ausgehend vom Aufnahmeabschnitt (9) zum Auflageabschnitt (8) hin zunimmt, und sich die Breite ausgehend vom Auflageabschnitt (8) in Richtung des Reibabschnitts (3) zumindest abschnittsweise verjüngt.

10. Trägheitsantrieb nach Anspruch 9, **dadurch gekennzeichnet, dass** die Breite des Federelements (5) ein Minimum zwischen dem Auflageabschnitt (8) und dem Reibabschnitt (3) aufweist.

11. Trägheitsantrieb nach einem der Ansprüche 8 bis 10, **dadurch gekennzeichnet, dass** die Breite des Federelements (5) im Bereich des Auflageabschnitts (8) konstant ist.

12. Trägheitsantrieb nach einem der vorhergehenden Ansprüche, **dadurch gekennzeichnet, dass** der Reibabschnitt (3) des Federelements (5) ein Reibelement (18) aufweist, das in das Federelement (5) eingesetzt ist.

13. Trägheitsantrieb nach einem der vorhergehenden Ansprüche, **dadurch gekennzeichnet, dass** das Verhältnis zwischen der Länge L_{AAFK} des Hebels zwischen dem Auflageabschnitt (8) und dem Gelenkabschnitt (13) und der Länge L_{ASFK} des Hebels zwischen dem Schwerpunkt des Aktorelements (1) und dem Gelenkabschnitt (13) zwischen 1,2 und 3 liegt.

14. Trägheitsantrieb nach einem der vorhergehenden Ansprüche, **dadurch gekennzeichnet, dass** das Rahmenelement (4) einstückig mit einer übergeordneten, das Rahmenelement (4) tragenden Struktur ausgebildet ist.

## Claims

1. Inertial drive, comprising a variable-length, in particular piezoelectric actuator element (1), comprising a frame element (4) with a support section (20), on the support surface (21) of which a first end section of the actuator element (1) is supported, and with a deformation section (22), against the abutment surface (23) of which a second end section of the actuator element (1) bears, said second end section being situated opposite the first end section of the actuator element (1), wherein the deformation section (22) has a joint section (13), and comprising a flat, preferably planar spring element (5) which is arranged on the deformation section (22) of the frame element (4) and which has a friction section (3) on its free end, and comprising a friction body (2) for being driven, which friction body is in direct or indirect mechanical contact with the friction section (3), wherein a variation in length of the actuator element (1) gives rise to a rotational movement of the deformation section (22) about the joint section (13), which rotational movement is transmitted via the spring element (5) to the friction section (3) for the purposes of driving the friction body (2) for being driven, wherein the friction section (3) is arranged spaced apart from the abutment surface (23) in a direction pointing away from the abutment surface (23).

2. Inertial drive according to Claim 1, **characterized in that** the mass of the support section (20) amounts to at least five times the mass of the deformation section (22).

3. Inertial drive according to Claim 1 or 2, **characterized in that** the joint section (13) is formed in one piece with the frame element (4) and forms a flexure joint.

4. Inertial drive according to one of the preceding claims, **characterized in that** the frame element (4) and the spring element (5) are arranged relative to one another such that the spring element (5) has a permanent preload directed toward the surface of the friction body (2), and said preload is transmitted via the frame element (4) to the actuator element (1) and effects a permanent pressure load on the actuator element (1), which pressure load is adjustable by way of the deformation of the spring element (4).

5. Inertial drive according to Claim 4, **characterized in that** the frame element (4) has a counterbearing section (9) and a bearing section (8), wherein the spring element (5) lies on the bearing section (8), and the section of the spring element (5) between the counterbearing section (9) and the bearing section (8) forms a clamping section (10) with a non-zero clamping length L_{S}.

6. Inertial drive according to Claim 5, **characterized in that** the spring element (5) forms, between the bearing section (8) and the friction section (3), a spring section (16) with a non-zero spring length L_{F}, and the spring length is at least twice the clamping length.

7. Inertial drive according to one of Claims 4 to 6, **characterized in that** the pressure force acting on the actuator element (1) is at least as high as the normal force acting on the friction body (2) and/or on the friction section (3).

8. Inertial drive according to one of Claims 5 to 7, **characterized in that** the spring element (5) is provided as a separate element, and the counterbearing section (9) is designed such that the spring element (5) can abut against it in a supporting manner.

9. Inertial drive according to Claim 8, **characterized in that** the spring element (5) has a width which varies over its length, wherein the width within the clamping section (10) increases from the receiving section (9) to the bearing section (8), and the width narrows at least in sections proceeding from the bearing section (8) in the direction of the friction section (3).

10. Inertial drive according to Claim 9, **characterized in that** the width of the spring element (5) has a minimum between the bearing section (8) and the friction section (3).

11. Inertial drive according to one of Claims 8 to 10, **characterized in that** the width of the spring element (5) is constant in the region of the bearing section (8).

12. Inertial drive according to one of the preceding claims, **characterized in that** the friction section (3) of the spring element (5) has a friction element (18) which is inserted into the spring element (5).

13. Inertial drive according to one of the preceding claims, **characterized in that** the ratio between the length L_{AAFK} of the lever between the bearing section (8) and the joint section (13) and the length L_{ASFK} of the lever between the center of gravity of the actuator element (1) and the joint section (13) lies between 1.2 and 3.

14. Inertial drive according to one of the preceding claims, **characterized in that** the frame element (4) is formed in one piece with a superordinate structure that supports the frame element (4).

## Revendications

1. Mécanisme d'entraînement par inertie, comprenant un élément actionneur (1) de longueur variable, en particulier piézoélectrique, un élément de châssis (4) avec une partie de support (20), sur la face de support (21) de laquelle s'appuie une première partie d'extrémité de l'élément actionneur (1), et avec une partie de déformation (22), sur la face d'appui (23) de laquelle s'applique une seconde partie d'extrémité de l'élément actionneur (1), qui est opposée à la première partie d'extrémité de l'élément actionneur (1), dans lequel la partie de déformation (22) présente une partie d'articulation (13), et un élément de ressort plat (5), de préférence plan, disposé sur la partie de déformation (22) de l'élément de châssis (4) avec une partie de friction (3) à son extrémité libre, et un corps de friction à entraîner (2) qui se trouve en contact mécanique direct ou indirect avec la partie de friction (3), dans lequel une variation de longueur de l'élément actionneur (1) suscite un mouvement de rotation de la partie de déformation (22) autour de la partie d'articulation (13), qui est transmis par l'élément de ressort (5) à la partie de friction (3) pour l'entraînement du corps de friction à entraîner (2), dans lequel la partie de friction (3) est disposée à distance de la face d'appui (23) dans une direction s'éloignant de la face d'appui (23).

2. Mécanisme d'entraînement par inertie selon la revendication 1, **caractérisé en ce que** la masse de la partie de support (20) vaut au moins le quintuple de la masse de la partie de déformation (22).

3. Mécanisme d'entraînement par inertie selon la revendication 1 ou 2, **caractérisé en ce que** la partie d'articulation (13) est réalisée d'une seule pièce avec l'élément de châssis (4) et forme une articulation à corps solides.

4. Mécanisme d'entraînement par inertie selon l'une quelconque des revendications précédentes, **caractérisé en ce que** l'élément de châssis (4) et l'élément de ressort (5) sont disposés l'un par rapport à l'autre de telle manière que l'élément de ressort (5) présente une précontrainte permanente, dirigée contre la surface du corps de friction (2), et cette précontrainte est transmise à l'élément actionneur (1) par l'élément de châssis (4) et provoque une sollicitation de pression permanente de l'élément actionneur (1) ajustable au moyen de la déformation de l'élément de ressort (5).

5. Mécanisme d'entraînement par inertie selon la revendication 4, **caractérisé en ce que** l'élément de châssis (4) présente une partie de contre-appui (9) et une partie d'appui (8), dans lequel l'élément de ressort (5) repose sur la partie d'appui (8), et la partie de l'élément de ressort (5) entre la partie de contre-appui (9) et la partie d'appui (8) forme une partie de serrage (10) avec une longueur de serrage L_{S} différente de zéro.

6. Mécanisme d'entraînement par inertie selon la revendication 5, **caractérisé en ce que** l'élément de ressort (5) forme entre la partie d'appui (8) et la partie de friction (3) une partie de ressort (16) avec une longueur de ressort L_{F} différente de zéro, et la longueur de ressort est au moins deux fois plus grande que la longueur de serrage.

7. Mécanisme d'entraînement par inertie selon l'une quelconque des revendications 4 à 6, **caractérisé en ce que** la force de pression agissant sur l'élément actionneur (1) est au moins juste aussi grande que la forme normale agissant sur le corps de friction (2) et/ou sur la partie de friction (3).

8. Mécanisme d'entraînement par inertie selon l'une quelconque des revendications 5 à 7, **caractérisé en ce que** l'élément de ressort (5) se présente sous la forme d'un élément séparé, et la partie de contre-appui (9) est réalisée de telle manière que l'élément de ressort (5) puisse y être appliqué d'une manière portante.

9. Mécanisme d'entraînement par inertie selon la revendication 8, **caractérisé en ce que** l'élément de ressort (5) présente une largeur variable sur sa longueur, dans lequel la largeur augmente à l'intérieur de la partie de serrage (10) de la partie de réception (9) à la partie d'appui (8), et la largeur diminue au moins localement à partir de la partie d'appui (8) en direction de la partie de friction (3).

10. Mécanisme d'entraînement par inertie selon la revendication 9, **caractérisé en ce que** la largeur de l'élément de ressort (5) présente un minimum entre la partie d'appui (8) et la partie de friction (3).

11. Mécanisme d'entraînement par inertie selon l'une quelconque des revendications 8 à 10, **caractérisé en ce que** la largeur de l'élément de ressort (5) est constante dans la région de la partie d'appui (8).

12. Mécanisme d'entraînement par inertie selon l'une quelconque des revendications précédentes, **caractérisé en ce que** la partie de friction (3) de l'élément de ressort (5) présente un élément de friction (18), qui est inséré dans l'élément de ressort (5).

13. Mécanisme d'entraînement par inertie selon l'une quelconque des revendications précédentes, **caractérisé en ce que** le rapport entre la longueur L_{AAFK} du levier entre la partie d'appui (8) et la partie d'articulation (13) et la longueur L_{ASFK} du levier entre le centre de gravité de l'élément actionneur (1) et la partie d'articulation (13) vaut entre 1,2 et 3.

14. Mécanisme d'entraînement par inertie selon l'une quelconque des revendications précédentes, **caractérisé en ce que** l'élément de châssis (4) est réalisé d'une seule pièce avec une structure supérieure portant l'élément de châssis (4).
